Europäisches Patentamt

European Patent Office

Office européen des brevets

(11) Veröffentlichungsnummer: **0 176 879**
**B1**

(12) **EUROPÄISCHE PATENTSCHRIFT**

(45) Veröffentlichungstag der Patentschrift: **14.03.90**

(21) Anmeldenummer: **85111865.3**

(22) Anmeldetag: **19.09.85**

(51) Int. Cl.⁵: **G 01 S 7/62,** G 01 S 15/89,
G 10 K 11/00

(54) **Ultraschall-Compound-Abtastung mit einem oszillierenden Wandler.**

(30) Priorität: **25.09.84 CH 4574/84**

(43) Veröffentlichungstag der Anmeldung:
**09.04.86 Patentblatt 86/15**

(45) Bekanntmachung des Hinweises auf die
Patenterteilung:
**14.03.90 Patentblatt 90/11**

(84) Benannte Vertragsstaaten:
**CH DE FR GB IT LI NL SE**

(56) Entgegenhaltungen:
**EP-A-0 037 012**
**EP-A-0 118 206**
**DE-A-2 719 130**
**US-A-3 990 300**
**US-A-4 241 608**
**US-A-4 277 979**
**US-A-4 399 704**

(73) Patentinhaber: **KONTRON-HOLDING AG
Bernerstrasse Süd 169
CH-8048 Zürich (CH)**

(72) Erfinder: **Abbott, John Garnet, Dr.
Schwarzackerstrasse 58
CH-4303 Kaiseraugst (CH)**
Erfinder: **Burckhardt, Christoph Benedikt, Dr.
Rebgasse 14
CH-4132 Muttenz (CH)**
Erfinder: **Grandchamp, Pierre-André, Dr.
Loogstrasse 26
CH-4142 Münchenstein (CH)**
Erfinder: **Krummenacher, Peter
Bleumatthalde 12
CH-5264 Gipf-Oberfrick (CH)**
Erfinder: **Schlaepfer, Claude
Kirchstrasse 474
CH-4323 Wallbach (CH)**

(74) Vertreter: **Körber, Wolfhart, Dr. et al
Patentanwälte Dipl.-Ing. H. Mitscherlich Dipl.-
Ing. K. Gunschmann Dr.rer.nat. W. Körber
Dipl.Ing. J. Schmidt-Evers Dipl.-Ing. W. Melzer
Steinsdorfstrasse 10
D-8000 München 22 (DE)**

**Beschreibung**

Die Erfindung betrifft ein Ultraschall-Bildgerät zur Erzeugung von Querschnittbildern eines Körpers nach dem Gattungsbegriff des Patentanspruchs 1.

Bei der abdominellen und geburtshilflichgynäkologischen Ultraschalldiagnostik sowie bei der Untersuchung von Körperweichteilen wird in der Regel im zweidimensionalen B-Bild-Verfahren gearbeitet. Hierbei wird eine zu untersuchende Region zeilenweise mit dem Ultraschall-Strahl abgetastet. Für die örtliche Verschiebung des Ultraschallstrahls, die zum Aufbau des Ultraschallbildes erforderlich ist, gibt es unterschiedliche technische Lösungen. Dabei unterscheidet man zwischen dem Compound-Scan-Verfahren, auch langsames B-Bild-Verfahren genannt, und dem Echtzeitverfahren, das auch schnelles B-Bild-Verfahren genannte wird.

Beim klassischen Compond-Scan-Verfahren wird ein Ultraschallwandler, der einen einzigen monolithischen Wandler enthält, unter Zwischenschalten eines Kopplungsmediums über die Haut geführt, wobei eine Kombination von Parallel- und Winkelverschiebung des Wandlers durchgeführt wird. Die jeweilige Stellung des Wandlers wird so auf elektrische Stellglieder übersetzt, daß im Bildanzeigegerät der Elektronenstrahl in der Richtung des jeweiligen Ultraschallstrahls abgelenkt wird. Auf diese Weise wird das Ultraschallbild Zeile für Zeile aufgebaut. Bei diesem Verfahren muß für die Bildanzeige ein Bildspeicher benutzt werden, da der Bildaufbau relativ langsam erfolgt und z.B. eine halbe bis etwa zwei Minuten pro Bild dauert. Die Vorteile des klassischen Compound-Scan-Verfahrens sind die folgenden:

1. Die Granularität ("speckle noise") des Bildes wird verringert. Dadurch werden Grautonunterschiede zwischen verschiedenen Gewebeteilen besser sichtbar und wird die Erkennbarkeit von Strukturen unterschiedlicher Gewebe wie z.B. Tumoren und Zysten verbessert.

2. Die Abbildung von Gewebe- und Organgrenzen wird verbessert. Da solche Grenzen die Ultraschallwellen spiegelnd reflektieren, liefert der Wandler ein Maximum an Echosignal, wenn der Ultraschallstrahl senkrecht auf die Grenzfläche einfällt. Die Wahrscheinlichkeit, daß diese Bedingung erfüllt wird, ist beim Compound-Scan-Verfahren groß, weil dabei der untersuchte Körper von einer Vielzahl verschiedener Richtungen mit Ultraschallwellenimpulsen bestrahlt wird.

Die Nachteile des oben beschriebenen, klassischen Compound-Scan-Verfahrens sind wie folgt:

1. Eine Echtzeitdarstellung von Bewegungsabläufen ist nicht möglich, da—bedingt durch den langsamen Bildaufbau—nur ein stehendes Speicherbild erzeugt werden kann, das vor einem neuen Bildaufbau gelöscht werden muß.

2. Der Zeitaufwand für die Untersuchung ist relativ groß.

3. Artefakte, die von Organbewegungen währen des langsamen Bildaufbaus verursacht werden, können die Bildqualität erheblich verschlechtern.

4. Die erforderliche Ausrüstung und die Bedienungstechnik sind relativ aufwendig.

5. Insbesondere wenn der Wandler von Hand bewegt wird, ist die Bildqualität stark vom Geschick des Untersuchers abhängig. Um brauchbare Bilder zu erzeugen, ist daher eine geeignete Ausbildung des Untersuchers erforderlich. Bilder, die vom selben Gegenstand von verschiedenen Untersuchern aufgenommen werden, sind in der Regel—auch bei gleichwertiger Ausbildung/Erfahrung der Untersucher—verschieden.

Im Gegensatz zum klassischen Compound-Scan-Verfahren sind· die sogenannten Echtzeitverfahren durch einen schnellen Bildaufbau gekennzeichnet. Durch mechanische oder elektronisch gesteuerte Abtastung kann jedes Bild in Sekundenbruchteilen erzeugt werden. Bei den Echtzeitverfahren werden Bildfolgefrequenzen erreicht, die größer als 15 Bilder pro Sekunde sein können.

Unter den Geräten zur Durchführung von Echtzeitverfahren sind Geräte bekannt, die eine um eine Oszillationsachse schwenkbare Anordnung von Ultraschallwandlern und eine Antriebsvorrichtung enthalten, mit der eine Oszillationsbewegung des Wandlers um die Oszillationsachse zwischen zwei Endstellungen durchführbar ist. Solche Geräte sind z.B. in der US—A—4,399,704 und in der DE—A—27 19 130 beschrieben.

Gemäß der US—A—4,399,704 besteht die Wanderanordnung aus einem kreisförmigen Wandler, der in zwei halbkreisförmigen Wandlerelementen geteilt ist und der um eine Oszillationsachse schwenkbar ist. Diese Wandlerelemente sind so angeordnet, daß sie die damit erzeugten Ultraschallwellen in verschiedenen Ebenen strahlen. Mittels Linsenelemente, die den Wandlerelementen zugeordnet sind, werden die mit von den Wandlerelementen abgestrahlten Ultraschallwellen in verschiedenen Ebenen und in verschiedenen Entfernungen fokussiert.

Gemäß der DE—A—27 19 130 enthält das Gerät einen länglichen, dreh- oder schwenkbaren Schallkopf, an dem mehrere Schwinger in Richtung der Längsachse des Schallkopfes versetzt (z.B. auf einer Schraubenlinie) angeordnet sind, so daß die Schwingerachsen bei Dreh- bzw. Schwenkbewegung des Schallkopfes in verschiedenen Ebenen ein Volumen des untersuchten Körpers bestreichen. Dabei können die Schwinger Einzelschwinger oder eine Gruppe von gleichzeitig aktivierbaren Wandlerelementen eines Multi-Element-Schwingers sein.

In der US—A—4,399,704 und in der DE—A—27 19 130 sind keine Mittel zur Durchführung von wenigstens zwei verschiedenen, sich teilweise überdeckenden Abtastungen des untersuchten Körpers in einer Abtastebene beschrieben. Solche Abtastungen sind jedoch zur Durchführung eines Compound-Scan-Verfahrens notwendig.

Der Hauptvorteil der Echtzeitverfahren ist die relativ kurze Untersuchungszeit bei vergleichbar gutem Auflösungsvermögen und ausreichender Grauabstufung sowie die Tatsache, daß infolge der relativ hohen Bildfolgefrequenz es möglich ist, Bewegungsabläufe in Echtzeit darzustellen, d.h. Bewegungsvorgänge können direkt während der Untersuchung beobachtet werden. Weitere Vorteile der Echtzeitverfahren sind die exakte Reproduzierbarkeit der Bilder (d.h. die Bildqualität ist von der manuellen Geschicklichkeit verschiedener Untersucher wenig abhängig), die geringeren Gerätekosten und die einfachere Bedienung der Geräte.

Ein wichtiger Nachteil der Echtzeitverfahren im Vergleich mit den Compound-Scan-Verfahren ist darin zu sehen, daß die Darstellung unterschiedlicher weicher Teile weniger gut ist. Einerseits sind die Grautonunterschiede infolge einer stärkeren Granularität der Bilder weniger deutlich sichtbar, andererseits ist die Abbildung von Gewebe- und Organgrenzen weniger gut, weil bei den Echtzeitverfahren die Möglichkeit, einen abzubildenden Gegenstand von verschiedenen Richtungen mit Ultraschallwellenimpulsen zu bestrahlen, nicht vorhanden ist.

Insbesondere für die medizinische Ultraschalldiagnostik ist allerdings das Bedürfnis vorhanden, über ein Verfahren bzw. eine Vorrichtung verfügen zu können, mit denen die Vorteile der beiden oben erwähnten Abtastverfahren erzielt werden können, ohne jedoch die Nachteile dieser Verfahren in Kauf nehmen zu müssen.

Der Erfindung liegt daher die Aufgabe zugrunde, ein Ultraschall-Bildgerät zu schaffen, mit dem soweit wie möglich die Vorteile sowohl des Compound-Scan-Verfahrens als auch des Echtzeitverfahrens erzielt werden können, wobei jedoch die Nachteile dieser beiden Verfahren weitgehend vermieden werden können.

Diese Aufgabe wird bei einem Ultraschall-Bildgerät nach dem Gattungsbegriff des Patentanspruchs 1 durch die kennzeichnenden Merkmale des Patentanspruchs 1 gelöst. Zweckmäßige Austestaltungen eines solchen Bildgerätes sind in den abhängigen Ansprüchen 2 bis 9 gekennzeichnet.

Mit dem erfindungsgemäßen Ultraschall-Bildgerät ist es möglich geworden, bei der Erzeugung eines Ultraschall - Querschnittbildes eines Körpers weitgehend die oben erwähnten Vorteile des klassischen Compound-Scan-Verfahrens und der sogenannten Echtzeitverfahren zu erzielen, ohne aber die oben erwähnten Nachteile dieser beiden Arten von Verfahren in Kauf nehmen zu müssen. Die mit der Erfindung erzielten Vorteile sind wie folgt:

Die erzeugten Ultraschallbilder haben eine geringe Granularität ("speckle noise"), so daß Grautonunterschiede zwischen ähnlichen Geweben darin besser erkennbar sind.

Gewebe- und Organgrenzen sind in den erzeugten Bildern deutlich erkennbar.

Da die Erfindung mit einem Wandler durchführbar ist, der sehr nahe an den Körper angeordnet werden kann und der durch seine geringe Masse relativ schnelle Oszillationsbewegungen ausführen kann, ist es möglich, eine relativ hohe Bildfolgefrequenz zu erzielen und dadurch Bewegungsabläufe in Echtzeit darzustellen.

Durch die relativ hohe Bildfolgefrequenz, die erzielt wird, wird die Bildqualität durch Organbewegungen während des Abtastvorgangs nicht beeinträchtigt.

Der Anwendungsbereich der Erfindung ist sehr breit. Durch geeignete Wahl und Einsatz eines für die spezifische Anwendung geeigneten Wandlers können z.B. verschiedene Körperteile eines Patienten untersucht werden. Besonders vorteilhaft ist die Anwendung der Erfindung für eine Echtzeit-Ultraschalldiagnostik der Abdominalorgane. Aufgrund der mit der Erfindung erzielten Werte der Bildfrequenz ist sie auch für Herzuntersuchungen geeignet.

Die erzeugten Bilder zeichnen sich durch eine sehr gute Reproduzierbarkeit aus, d.h. die erzielte Bildqualität ist von der manuellen Geschicklichkeit des Untersuchers wenig abhängig.

Die Breite des Abtastbereichs an und in der Nähe der Hautoberfläche ist größer als bei einem Sektor-Scan.

Der Betrieb des erfindungsgemäßen Ultraschall-Bildgeräts ist relativ einfach, und die dafür erforderliche Untersuchungszeit ist sehr kurz.

Die Erfindung kann mit relativ geringem apparativem Aufwand verwirklicht werden.

Die Merkmale und Vorteile der Erfindung gehen aus der folgenden, anhand der beiliegenden Zeichnungen vorgenommenen Beschreibung von Ausführungsbeispielen hervor. Es zeigen.

Fig. 1 ein Blockdiagramm eines erfindungsgemässen Geräts,

Fig. 2 eine schematische Darstellung einer Ausführungsform der Ultraschall - Wandlereinrichtung 112 in Fig. 1,

Fig. 3—5 einige Ausführungsformen des Wandlers 12 in Fig. 1 und 2,

Fig. 6—7 die Verwendung eines erfindungsgemässen Geräts und der dazugehörigen Ultraschall - Abtastvorrichtung zur Untersuchung eines Patienten.

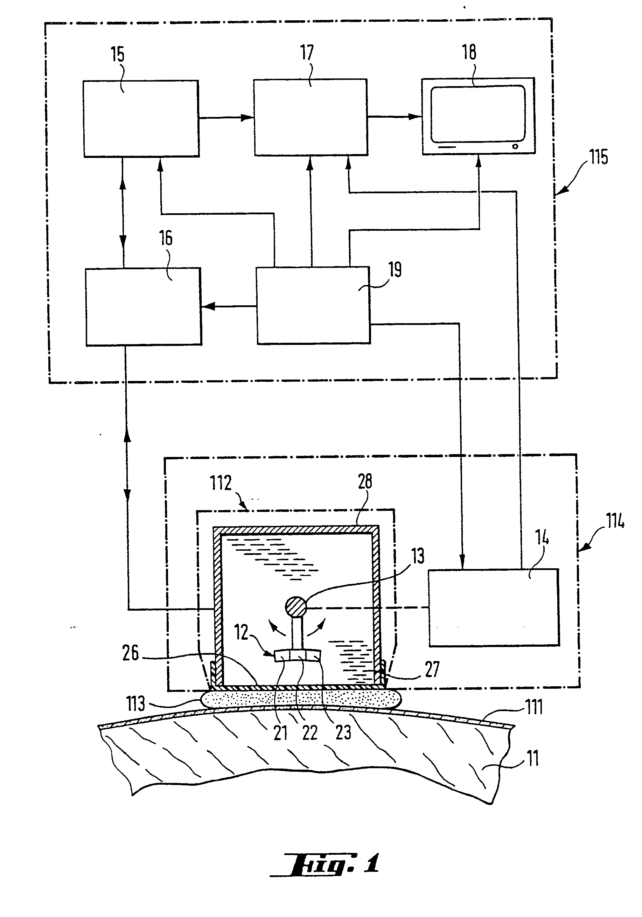

In Fig. 1 ist ein Ultraschall-Bildgerät zur Durchführung des erfindungsgemässen Verfahrens schematisch durch ein Blockdiagramm dargestellt. Dieses Gerät enthält eine Ultraschall - Abtastvorrichtung 114 und eine Signalverarbeitungseinheit 115.

Die Ultraschall-Abtastvorrichtung 114 enthält eine Ultraschall-Wandlereinrichtung 112 und eine Antriebsvorrichtung 14.

Die in Fig. 1 dargestellte Signalverarbeitungseinheit 115 enthält eine Sender-Empfänger-Vorrichtung 15, eine Elementen-Auswahlvorrichtung 16, eine Bildsignalaufbereitungseinheit 17, einen Fernsehmonitor 18, der zur Anzeige der Ultraschallbilder dient, und eine Steuereinheit 19.

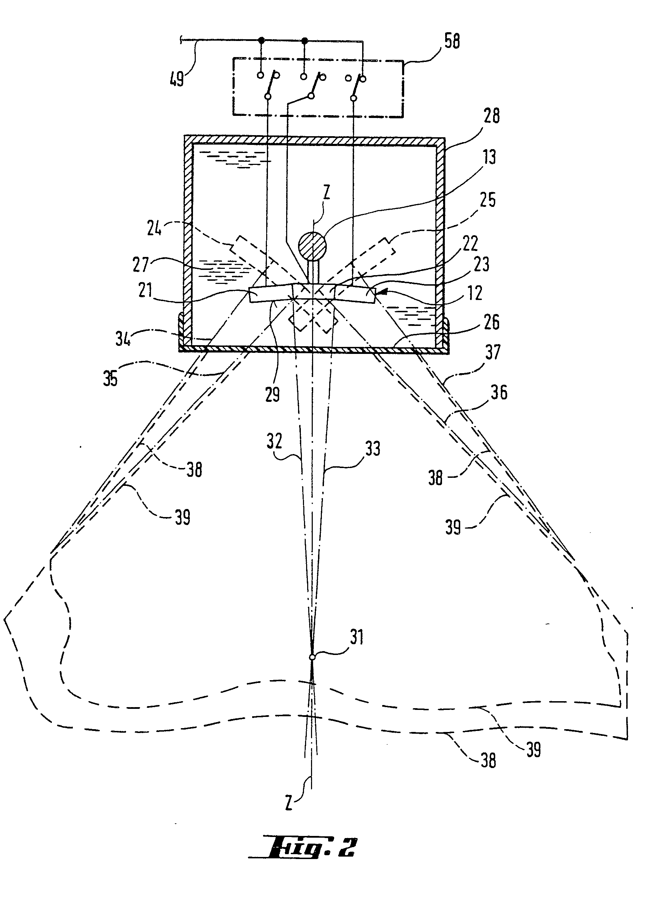

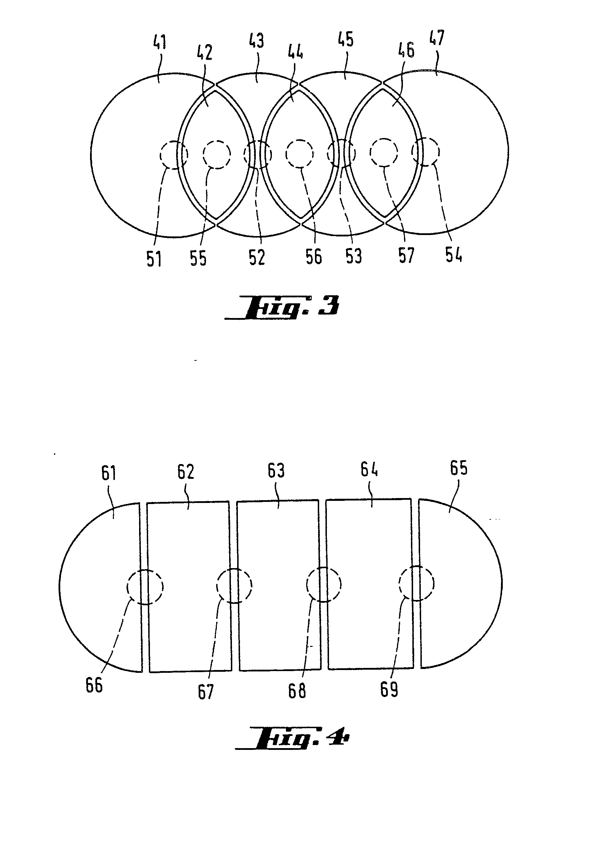

Wie in Figuren 1 und 2 gezeigt, enthält die Wandlereinrichtung 112 einen einzigen Ultraschallwandler 12, der um eine zur Abtastebene senkrechte Oszillationsachse 13 schwenkbar ist, und der in einem durch ein Gehäuse 28 und eine für Ultraschall durchlässige, z.B. aus Kunststoff bestehende Membrane 26 gebildeten Behälter enthalten ist. Dieser Behälter ist mit einer Uebertragungsflüssigkeit 27 gefüllt, z.B. mit Rizinusöl. In einer bevorzugten Ausführungsform enthält der Wandler 12 einen monolithischen Ultraschallschwinger und aneinander angrenzende Elektroden die zur Anregung des Schwingers dienen. Der Wandler 12 kann durch die Verwendung dieser Elektroden als eine Anordnung von aneinander angrenzenden Wandlerelementen betrieben werden, die einzeln oder gruppenweise verwendet werden können. Der Wandler 12 bildet eine starre Einheit. Die Abstrahlfläche des Wandlers ist vorzugsweise sphärisch, sie kann aber auch zylindrisch oder eben sein. Die von den Elektroden des Wandlers bedeckte Fläche setzt sich aus Flächensgementen zusammen, die verschiedene Form haben können. Einige Beispiele solcher Formen sind nachstehend anhand der Figuren 3—5 erläutert.

Mit der Antriebsvorrichtung 14, die durch die Steuereinheit 19 gesteuert wird, ist eine Oszillationsbewegung des Wandlers 12 durchführbar. Die Antriebsvorrichtung enthält einen Antriebsmotor und einen Winkelgeber, der als Istwertgeber zusammen mit einem Sollwertgeber in einem Regelkreis für den Antriebsmotor zur Erzielung einer Winkelbewegung des Wandlers 12 nach Sollwert eingeschaltet ist. Der Winkelgeber liefert ein Signal, das der jeweiligen Stellung des Wandlers 12 entspricht, und das der Bildsignalaufbereitungseinheit 17 zugeführt wird. Der Aufbau der Antriebsvorrichtung kann jedoch einfacher sein, z.B. ohne Regelkreis aber mit einem einfachen Winkelgeber. Wenn für den Antrien ein Schrittmotor verwendet wird, ist ein Winkelgeber nicht mehr erforderlich.

In der Sender-Empfänger-Vorrichtung 15 werden die Sendesignale für die Wandlerelemente des Wandlers 12 erzeugt, und die von den Wandlerelementen gelieferten Echosignale zur Erzeugung von Bildsignalen verarbeitet.

Zwischen der Sender-Empfänger-Vorrichtung 15 und dem Wandler 12 ist die Elementen-Auswahleinrichtung eingeschaltet, die dazu dient, wenigstens zwei verschiedene Wandlerelemente oder zwei verschiedene Gruppen von aneinander angrenzenden Wandlerelementen des Wandlers auszuwählen und jedes ausgewählte Wandlerelement bzw. jede ausgewählte Gruppe von Wandlerelementen mit der Sender-Empfänger-Vorrichtung elektrisch zu verbinden. Vorzugsweise sind die verschiedenen Wandlerelemente oder die verschiedenen Gruppen von Wandlerelementen gleich breit, und die Elementen-Auswahleinrichtung 16 wählt die Wandlerelemente oder die Gruppen von Wandlerelementen so aus, dass der Abstand zwischen den Mittelpunkten der Abstrahlflächen der wenigstens zwei verschiedenen Wandlerelemente oder der wenigstens zwei verschiedenen Gruppen annähernd die Hälfte der Breite jedes Wandlers bzw. jeder Gruppe beträgt.

Durch die Abtastung des Körpers 11 mit verschiedenen Wandlerelementen oder verschiedenen Gruppen von Wandlerelementen des Wandlers 12 werden Einzelbilder aufgenommen. Die Bildsignalaufbereitungseinheit 17 dient dazu, ein elektronisches Compounding, d.h. eine Zusammensetzung dieser Einzelbilder durchzuführen, um ein Compound-Bild zu erzeugen. Hierfür enthält die Einheit 17 Mittel zur Speicherung und Assoziation der von der Sender-Empfänger-Vorrichtung abgegebenen Bildsignale und Mittel, die eine Uebertragung der so erzeugten, dem Compound-Bild entsprechenden Bildsignale auf den Fernsehmonitor 18 ermöglichen.

Auf Einzelheiten des Aufbaus und der Funktionsweise der Einheit 17 wird in der vorliegenden Beschreibung nicht eingegangen.

Mit dem Fernsehmonitor 18 wird ein Bild angezeigt, dass durch die oben erwähnte Zusammensetzung von Einzelbildern erzeugt wird.

Die Steuereinheit 19 steuert die Funktion der Antriebsvorrichtung 14, der Sender-Empfänger-Vorrichtung 15, der Elementen-Auswahleinrichtung 16, der Bildsignalaufbereitungseinheit 17, und des Fernsehmonitors 18.

Fig. 2 zeigt schematisch einen in der Abtastebene liegenden Querschnitt einer Ausführungsform der Wandlereinrichtung 112 und einen Teil der Elementen-Auswahleinrichtung 16 in Fig. 1. Gemäss Fig. 2 enthält die Wandlereinrichtung einen Wandler 12, der in drei Wandlerelemente 21, 22, 23 segmentiert ist. Wie in Fig. 2 angedeutet, ist der Wandler 12 um die Oszillationsachse 13 zwischen 2 Endstellungen 24 und 25 schwenkbar. Ueber eine Schalteranordnung 58, die in der Elementen-Auswahleinrichtung 16 in Fig. 1 enthalten ist, sind die Wandlerelemente 21, 22 bzw. 22, 23 abwechselnd, einzeln oder gruppenweise über eine Leitung, 49 an die Sender-Empfänger-Vorrichtung 15 in Fig. 1 anschliessbar. Zur Fokussierung der Ultraschallwellen hat die Abstrahlfläche 29 des Wandlers 12 vorzugsweise eine sphärische oder zylindrische Krümmung. In Fig. 2 hat die Abstrahlfläche 29 des Wandlers 12 eine solche Krümmung. Wenn der Wandler 12 sich in der mittleren, in Fig. 2 mit vollen Linien gezeichnete Stellung befindet, liegt der Krümmungsmittelpunkt der Abstrahlfläche 29 in dem Punkt 31, und die Hauptachsen 32 bzw. 33 der mit dem Wandlerelementen 21, 22 bzw. 22, 23 gesendeten Ultraschallstrahlen verlaufen durch den Punkt 31, der auf der Symmetrieachse Z—Z des Wandlers in der Abtastebene liegt.

Wenn der Wandler 12 sich in den Endstellungen 24 bzw. 25 befindet, liegen diese Hauptaschsen in den durch die Geraden 34 bzw. 35 (für die Endstellung 24) und 36 bzw. 37 (für die Endstellung 25) definierten Lagen.

Der in Fig. 2 durch die Linien 38 eingeschlossene Bereich definiert das von der Hauptachsen 32 oder der Hauptachse 33 insgesamt abgetastete Gebiet. Der durch die Linie 39 eingeschlossene Bereich definiert hingegen das Gebiet das sowohl von der Hauptachse 32 der Gruppe von Wandlerelementen 21, 22 als auch von der Hauptachse 33 der Gruppe 22, 23 abgetastet wird. Durch Ueberlagerung der beiden Einzelbilder, die durch Abtastung mit diesen Gruppen von Wandlerelementen erzeugt werden, kann also ein sogenannter Compounding oder Zusammensetzung 2. Ordnung durchgeführt werden.

Die in Figuren 1 und 2 gezeigte Ausführungsform des Wandlers 12 enthält 3 Wandlerelemente. Wie nachstehend anhand der Figuren 3, 4 und 5 erläutert, kann jedoch der Wandler mehr als 3 Wandlerelemente enthalten, und durch die Wahl der Form der Elektroden die zur Anregung dieser Elemente benutzt werden, kann auch die Abstrahlfläche jeder dieser Elemente verschiedene Formen haben. In den Figuren 3, 4 und 5 sind Ausführungsformen des Wandlers 12 mit unterschiedlichen Segmentierungen in Wandlerelementen schematisch dargestellt.

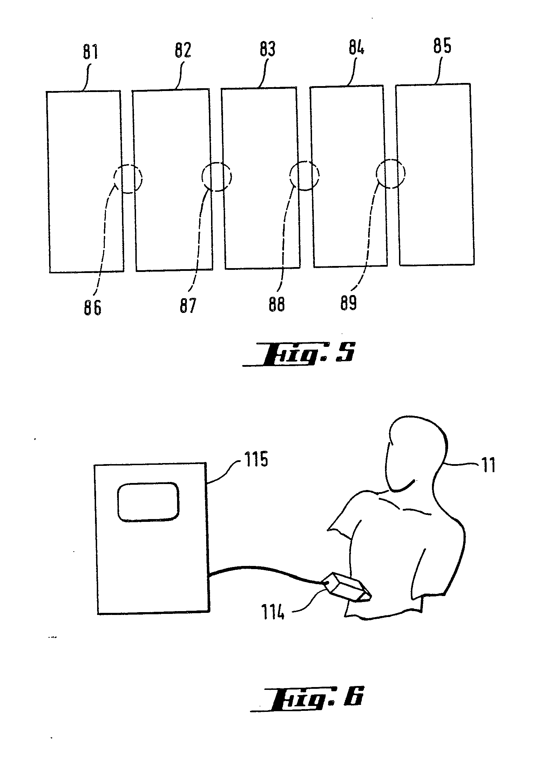

In der Ausführungsform gemäss Fig. 3 setzt sich die von den Elektroden des Wandlers bedeckte Fläche aus Kreisflächensegmenten zusammen. Damit wird die in Fig. 3 dargestellte Segmentierung des Wandlers in Wandlerelemente 41—47 erzielt. Auf ähnliche Weise wird in den Ausführungsformen gemäss Fig. 4 und 5 die dort gezeigte Segmentierung des Wandlers in Wandlerelemente 61—65 bzw. 81—85 erzielt.

Zur Fokussierung des Ultraschall-Strahlenbündels, das mit dem in Fig. 3, 4 oder 5 gezeigten Wandler erzeugbar ist, bzw. der entsprechenden Empfangscharakteristik, ist es möglich, anstelle von oder zusätzlich zu einer Krümmung der Abstrahlfläche des Wandlers, unterschiedliche Verzögerungen der Sende- bzw. Echosignale für die bzw. von den einzelnen Wandlerelementen vorzusehen.

Durch die Verwendung verschiedener, mit den Wandlerelementen gebildeter Gruppen können verschiedene Ultraschall-Strahlenbündel erzeugt werden.

In Fig. 3 ist durch je einen der kleinen Kreise 51—57 ein Symmetriezentrum des Querschnitts eines mit einer Gruppe von Wandlerelementen erzeugten Ultraschall-Strahlenbündels dargestellt. Zur Erzeugung eines Compound-Bildes mit dem Wandler gemäss Fig. 3 können folgenden Gruppen von Wandlerelementen verwendet werden:

| Gruppe | Wandlerelemente | Symmetriezentrum |
|--------|-----------------|------------------|
| 1 | 41,42 | 51 |
| 2 | 42,43,44 | 52 |
| 3 | 44,45,46 | 53 |
| 4 | 46,47 | 54 |
| 5 | 41,42,43,44 | 55 |
| 6 | 42,43,44,45,46 | 56 |
| 7 | 44,45,46,47 | 57 |
| 8 | 41,42,43,44,45,46 | 52 |
| 9 | 42,43,44,45,46,47 | 53 |
| 10 | 41,42,43,44,45,46,47 | 56 |

Durch Abtastung eines Körpers mit Kombinationen der Gruppen 1 bis 10 können Einzelbilder verschiedener Granularität erzeugt werden. Durch elektronische Zusammensetzung merhrerer dieser Einzelbilder kann ein Compound-Bild erzeugt werden, in dem die Organ- und Gewebegrenzen deutlicher sichtbar sind als in den Einzelbildern.

Der Wandler 12 hat in der Ausführungsform gemäss Fig. 4 die Wandlerelemente 61—65. In Fig. 4 ist durch je einen kleinen Kreis 66—69 annähernd das Symmetriezentrum des Querschnitts eines Ultraschall - Strahlenbündels dargestellt, das mit einer Gruppe von zwei benachbarten Wandlerelementen erzeugbar ist. Analog wie mit dem Wandler gemäss Fig. 3 können auch mit der Ausführungsform gemäss Fig. 4 für ein Compounding höherer Ordnung Kombinationen folgende Gruppen von Wandlerelementen zur Erzeugung eines Compound-Bildes verwendet werden:

| Gruppe | Wandlerelemente |
|--------|-----------------|
| 1 | 61,62,63 |
| 2 | 62,63,64 |
| 3 | 63,64,65 |
| 4 | 61,62,63,64 |
| 5 | 62,63,64,65 |
| 6 | 61,62,63,64,65 |

Die obigen Angaben in bezug auf die Ausführungsformen gemäss Figuren 3 und 4 gelten analog für die Ausführungsform des Wandlers 12 gemäss Fig. 5, die Wandlerelemente 81—85 besitzt. In Figur 5 stellt jeder der kleinen Kreise 86—89 ein Symmetriezentrum dar.

Wenn das oben beschriebene Gerät z.B. mit einem Wandler gemäss Fig. 5 arbeitet, ist es zur Erzielung einer guten Querauflösung von Vorteil, wenn die Elementen-Auswahleinrichtung so gesteuert wird, dass diese die Gruppen von Wandlerelementen so wählt, dass ihre Abstrahlflächen in solche symmetrische Konfigurationen ausgebildet werden, dass die Symmetrieachsen der Abstrahlflächen der einzelnen Gruppen entweder in den Lücken zwischen zwei benachbarten Wandlerelementen oder in der Mitte der Abstrahlfläche eines Wandlerelements zum Liegen kommen. Es ist bei einer solchen Ausführungsform vorteilhaft, die Elementen-Auswahleinrichtung so einzurichten, dass sie die Gruppen von Wandlerelementen so wählt, dass während eines ganzen Arbeitszykluses die Symmetrieachsen der Abstrahlflächen der ausgewählten Gruppen jede mögliche Position in den Lücken zwischen zwei benachbarten Wandlerelementen bzw. in der Mitte eines Wandlerelements mindestens einmal einnehmen, wobei gegebenenfalls nur die Wandlerelemente der ersten Hälfte der ersten und der zweiten Hälfte der letzten Wandlergruppe des Wandlers ausgenommen werden.

Wenn das oben beschriebene Gerät z.B. mit einem Wandler gemäss Fig. 3, 4 oder 5 arbeitet, ist es ferner zur Erzielung einer guten Bildqualität über die ganze Untersuchungstiefe und über die ganze Breite des erzeugten Compoundbildes von Vorteil, wenn die Elementen-Auswahleinrichtung 16 so gesteuert wird, dass jedes der von ihr gewählten Wandlerelemente oder jede der von ihr gewählten Gruppen von Wandlerelementen ausschliesslich in einer bestimmten Richtung der Oszillationsbewegung des Wandlers verwendet wird. Auf diese Weise werden Bildstörungen vermieden, die auf die Verwendung einer und derselben Gruppe von Wandlerelementen für beide, entgegengesetzte Richtungen der Oszillationsbewegung des Wandlers zurückzuführen sind. Diese vom menschlichen Auge wahrnehmbare Bildstörung ist darauf zurückzuführen, dass durch Abtastungen, die mit demselben Wandler in entgegengesetzten Richtungen durchgeführt werden, voneinander abweichende Bilder erzeugt werden.

Zur Erläuterung der soeben erwähnten Ausführungsform werden non anhand der Fig. 3 zwei Beispiele beschrieben. Mit dem in Fig. 3 gezeigten Wandler und einer geeigneten Steuerung der Elementen-Auswahleinrichtung können z.B. folgende Gruppen von Wandlerelementen verwendet werden:

| Gruppe | Wandlerelemente |
|--------|-----------------|
| 1 | 41,42 |
| 2 | 41,42,43 |
| 3 | 44,45,46 |
| 4 | 46,47 |

Für einen Compounding 4. Ordnung, d.h. zur Bildung eines Compound-Bildes durch Ueberlagerung von 4 einzelnen Sektor Scan-Abbildungen können die obige Gruppen z.B. wie folgt eingesetzt werden:

In einer ersten Ausführungsform können folgende Oszillationsbewegungen nacheinander durchgeführt werden, wobei jede Oszillationsbewegung in einer der Endstellungen 24 bzw. 25 in Fig. 2 beginnt und in der anderen Endstellung 25 bzw. 24 endet:

| Oszillations-bewegung | Richtung der Bewegung | Verwendete wandlergruppe |
|:---:|:---:|:---:|
| 1 | von links nach rechts | 1 |
| 2 | von rechts nach links | 3 |
| 3 | von links nach rechts | 2 |
| 4 | von rechts nach links | 4 |

In einer zweiten Ausführungsform wird die Zahl der erforderlichen Oszillationsbewegungen reduziert, indem man die Wandlergruppe wie folgt einsetzt:

| Oszillations-bewegung | Richtung der Bewegung | Verwendete wandlergruppe |
|:---:|:---:|:---:|
| 1 | von links nach rechts | 1,2,1,2 |
| 2 | von rechts nach links | 3,4,3,4 |

In dieser zweiten Ausführungsform werden verschiedene Wandlergruppen z.B. 1 und 2 während derselben Oszillationsbewegung abwechselnd verwendet.

Zur Erzeugung eines Ultraschall-Querschnittbildes, z.B. von einem Teil des Körpers eines Patienten, wird das anhand der Figuren 1—8 beschriebene Gerät wie folgt benutzt:

Wie in Fig. 1 gezeigt, wird die Wandlereinrichtung 112 auf die Haut 111 des zu untersuchenden Körperteils 11 aufgesetzt, wobei ein Uebertragungsgel 113 zwischen der Membran 26 der Wandlereinrichtung und die Haut des Patienten gebracht wird. Das Gerät wird dann so betrieben, dass der Wandler 12 zur Abtastung des Körpers eine Oszillationsbewegung um die Achse 13 ausführt, wobei er sich kontinuierlich zwischen zwei extremen Endstellungen 24 bzw. 25 (siehe Fig. 2) bewegt.

Bei der Durchführung der Abtastungen werden wenigstens zwei verschiedene, mittels der Elementen-Auswahleinrichtung 16 ausgewählte Wandlerelemente oder Gruppen von aneinander angrenzenden Wandlerelementen des Wandlers 12 benutzt (z.B. die oben anhand der Fig. 2—5 beschriebenen Gruppen), wobei jedes Wandlerelement bzw. jede Gruppe sowohl für die Ausstrahlung von Ultraschallimpulsen wie auch für den Empfang von Echowellen verwendet wird. Die soeben erwähnte Austrahlung von Ultraschallimpulsen und der Empfang der Echowellen finden während der Oszillationsbewegung des Wandlers statt. Bei allen auf diese Weise durchgeführten Abtastungen des Körpers 11 bleibt die Position der Oszillationsachse 13 in bezug auf den Körper 11 unverändert.

Mit dem soeben beschriebenen Verfahren werden also wenigstens zwei verschiedene, sich teilweise überdeckende Sektorabtastungen des Körpers nach dem Impulsechoverfahren, in einer Abtastebene und mit einer einzigen Ultraschall-Wandlereinrichtung durchgeführt. Durch diese Sektorabtastungen werden also verschiedene Einzelbilder aufgenommen. Die Bildsignale, die jedem dieser Bilder entsprechen, werden mittels der Sender-Empfänger-Vorrichtung 15 aus den Echosignalen gewonnen und laufend in der Bildsignalaufbereitungseinheit 17 gespeichert. In dieser Einheit 17 findet laufend durch eine geeignete Verarbeitung der gespeicherten Bildsignale eine elektronische Zusammensetzung der verschiedenen, mit den Sektorabtastungen erzeugten Einzelbilder statt. Das Compound-Bild, das durch diese Zusammensetzung erzeugt wird, wird mit dem Fernsehmonitor 18 angezeigt.

Bei der Durchführung des Verfahrens ist es zur Verringerung der Granularität (sogenannter "speckle noise") der damit erzeugten Ultraschallbilder vorteilhaft, dass die verwendeten Wandlerelemente oder Gruppen von Wandlerelementen gleich breit sind, und dass der Abstand zwischen den Mittelpunkten der Abstrahlflächen der Wandlerelemente oder Gruppen von Wandlerelementen, die für die Durchführung der wenigstens zwei verschiedenen Abtastungen verwendet werden, annähernd die Hälfte der Breite des Wandlerelements bzw. der Gruppe beträgt.

Zur Erhöhung der Zahl der Abtastlinien bei der Erzeugung der Querschnittbilder ist es vorteilhaft, dass die Abstrahlflächen der Gruppen von Wandlerelementen in solche symmetrische Konfigurationen ausgebildet werden, dass die symmetrieachsen der Abstrahlflächen der einzelnen Gruppen entweder in den Lücken zwischen zwei benachbarten Wandlerelementen oder in der Mitte der Abstrahlfläche eines Wandlerelements zur Liegen kommen.

Eine besonders hohe Zahl von Abtastlinien wird erzielt, wenn die Gruppen von Wandlerelementen so ausgewählt werden, dass während eines ganzen Abtastzykluses die Symmetrieachsen der Abstrahlflächen der ausgewählten Gruppen jede mögliche Position in den Lücken zwischen zwei benachbarten Wandlerelementen bzw. in der Mitte eines Wandlerelements mindestens einmal einnehmen, wobei gegebenenfalls nur die Wandlerelemente der ersten Hälfte der ersten und der zweiten Hälfte der letzten Wandlergruppe des Wandlers ausgenommen werden.

Versuche haben gezeigt, dass eine in bestimmten Bereichen des Ultraschallbildes sichtbare Verzerrung

7

des Bildes daraus zurückzuführen ist, dass ein und dasselbe Wandlerelement bzw. eine und dieselbe Gruppe von Wandlerelementen während Oszillationsbewegungen in entgegengesetzten Richtungen eingesetzt wird. Um solche Verzerrungen zu vermeiden ist es angezeigt, dass jedes der verschiedenen Wandlerelemente oder jede der verschiedenen Gruppen von Wandlerelementen ausschliesslich in einer bestimmten Richtung der Oszillationsbewegung des Wandlers verwendet wird. Dies lässt sich z.B. dadurch erreichen, dass während der ganzen Dauer der Oszillationsbewegung des Wandlers in einer ersten Richtung wengistens eine erste Gruppe von Wandlerelementen, z.B. die mit den Wandlerelementen 21, 22 in Fig. 2 gebildete Gruppe, sowohl für die Austrahlung von Ultraschallimpulsen wie auch für den Empfang von Echowellen verwendet wird, und dass während der ganzen Dauer der Oszillationsbewegung des Wandlers in entgegengesetzter Richtung wenigstens eine zweite Gruppe von Wandlerelementen, die von der ersten Gruppe verschieden ist, z.B. die mit den Wandlerelementen 22, 23 in Fig. 2 gebildete Gruppe, sowohl für die Ausstrahlung von Ultraschallimpulsen wie auch für den Empfang von Echowellen verwendet wird.

Eine andere Möglichkeit, die oben erwähnte Verzerrung zu vermeiden, besteht darin, dass während der Oszillationsbewegung des Wandlers in einer ersten Richtung wenigstens ein erstes Paar voneinander verschiedener Wandlerelemente oder Gruppen von Wandlerelementen, z.B. die oben anhand der Fig. 3 beschriebene Gruppen 1 und 2, abwechselnd sowohl für die Ausstrahlung von Ultraschallimpulsen wie auch für den Empfang von Echowellen verwendet werden, und dass während der Oszillationsbewegung des Wandlers in entgegengesetzter Richtung wenigstens ein zweites Paar voneinander und von den Wandlerelementen bzw. von den Gruppen des wenigstens ersten Paares verschiedener Wandlerelemente mder Gruppen von Wandlerelementen, z.B. die oben anhand der Fig. 3 beschriebene Gruppen 3 und 4, abwechselnd sowohl für die Austrahlung von Ultraschallimpulsen wie für den Empfang von Echowellen verwendet werden. Auf diese Weise wird jedes der verwendeten Wandlerelemente bzw. Gruppen von Wandlerelementen nur während Oszillationsbewegungen des Wandlers in einer bestimmten Richtung verwendet.

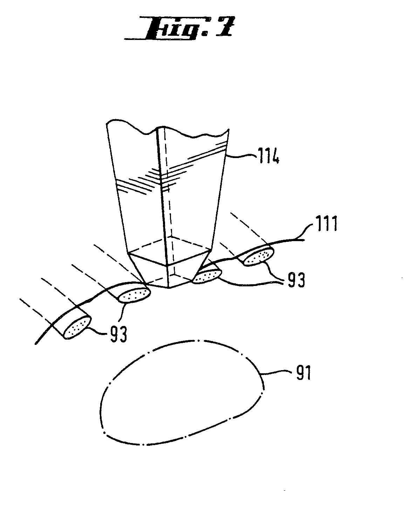

Die Verwendung des erfindungsgemässen Geräts zur Untersuchung eines Patienten wird non anhand der Fig. 6 und 7 erläutert. In Fig. 6 wird die Anordnung der Abtastvorrichtung 114 in bezug auf den Körper 11 des Patienten bei der Untersuchung seines Abdomens dargestellt. Die anderen Teile des Geräts sind in Fig. 6 durch den Block 115 dargestellt. Fig. 7 zeigt die Anordnung der Abtastvorrichtung 114 in bezug auf das Herz 91 und die Rippen 93 des Patienten bei einer Untersuchung des Herzens. Bei diesen Untersuchungen arbeitet der in der Wandlereinrichtung enthaltene Wandler 12 (in Fig. 6 und 7 nicht gezeigt) in der oben beschriebenen Weise; er schwingt hin und her, sendet Ultraschallimpulse durch die Haut 111 des Patienten und empfängt Echowellen.

## Patentansprüche

1. Ultraschall-Bildgerät zur Erzeugung von Querschnittbildern eines Körpers mit einer Ultraschall-Wandleranordnung (112) mit einem um eine Oszillationsachse (13) in einer zu dieser Achse senkrechten Ebene schwenkbaren Ultraschallwandler (12) zur Aussendung von Ultraschallimpulsen entlang seiner jeweiligen Schwenkstellung entsprechenden Abtastzeilen der Ebene und zur Umsetzung von zum Ultraschallwandler gelangenden Echosignalen in elektrische Bildsignale, wobui der Ultraschallwandler (12) in einem vorgegebenen Abstand von der Oszillationsachse (13) angeordnet und in wenigstens drei starr miteinander verbundene Wandlerelemente (21, 22, 23) unterteilt ist, welche entlang der Schwenkrichtung in einer Reihe angeordnet sind,

einer mit der Oszillationsachse gekoppelten Antriebsrichtung (14) zur periodischen Verschwenkung des Ultraschallwandlers über einen durch vorgegebene Endstellungen definierten Winkelbereich der Ebene,

einer Sender-Empfänger-Einrichtung (15, 17) zur impulsweisen Anregung des Ultraschallwandlers und zur Verarbeitung der Bildsignale und

einem an die Sender-Empfänger-Einrichtung angeschlossenen Bildwiedergabegerät (18), dadurch gekennzeichnet, daß

zwischen der Ultraschall-Wandleranordnung (112) und der Sender-Empfänger-Einrichtung (15, 17) eine Element-Auswahleinrichtung (58) angeordnet ist, welche steuerbare Schaltmittel (58) zur Verbindung der Sender-Empfänger-Einrichtung mit ausgewählten Wandlerelementen umfaßt,

eine Steuereinrichtung (19) für die Schaltmittel (58) vorgesehen ist, welche so ausgebildet ist, daß während aufeinanderfolgender Schwenkbewegungen in einer gegebenen Schwenkstellung jeweils ein anderes aus wenigstens zwei Wandlerelementen ausgewähltes Element oder jeweils eine andere aus wenigstens zwei Gruppen von aneinander angrenzenden Wandlerelementen ausgewählte Gruppe mit der Sender-Empfänger-Einrichtung verbunden ist,

die Sender-Empfänger-Einrichtung Mittel (17) zur Bildung zusammengesetzter Bildsignale aus den während unterschiedlicher Schwenkbewegungen erhaltenen Bildsignalen aufweist.

2. Gerät gemäß Anspruch 1, dadurch gekennzeichnet, daß die Abstrahlfläche des Wandlers (12) sphärisch, zylindrisch oder eben ist.

3. Gerät gemäß Anspruch 1, dadurch gekennzeichnet, daß jede der verschiedenen Gruppen von Wandlerelementen mit einer Abstrahlfläche arbeitet, die sich aus Kreisflächenteilen und/oder aus Rechtecksflächen zusammensetzt.

4. Gerät gemäß Anspruch 1, dadurch gekennzeichnet, daß die verschiedenen Wandlerelemente (21, 22, 23) oder die verschiedenen Gruppen von Wandlerelementen gleich breit sind, und daß die Steuereinrichtung (19) die Wandlerelemente oder die Gruppen von Wandlerelementen so wählt, daß der Abstand zwischen den Mittelpunkten der Abstrahlflächen der wenigstens zwei verschiedenen Wandlerelemente oder der wenigstens zwei verschiedenen Gruppen annähernd die Hälfte der Breite jedes Wandlers bzw. jeder Gruppe beträgt.

5. Gerät gemäß Anspruch 1, dadurch gekennzeichnet, daß die Steuereinrichtung (9) die Gruppen von Wandlerelementen so wählt, daß ihre Abstrahlflächen in solche symmetrische Konfigurationen ausgebildet werden, daß die Symmetrieachsen der Abstrahlflächen der einzelnen Gruppen entweder in den Lücken zwischen den Abstrahlflächen benachbarter Wandlerelemente oder in der Mitte der Abstrahlfläche eines Wandlerelements zum liegen kommen.

6. Gerät gemäß Anspruch 5, dadurch gekennzeichnet, daß die Steuereinrichtung die Gruppen von Wandlerelementen so wählt, daß während einer Folge von Schwenkbewegungen des Wandlers die Symmetrieachsen der Abstrahlflächen der ausgewählten Gruppen jede mögliche Position in den Lücken zwischen den Abstrahlflächen benachbarter Wandlerelemente bzw. in der Mitte der Abstrahlfläche eines Wandlerelements mindestens einmal einnehmen, wobei dies nicht für die Wandlerelemente der ersten Hälfte der ersten und der zweiten Hälfte der letzten Wandlergruppe des Wandlers gilt.

7. Gerät gemäß Anspruch 1, dadurch gekennzeichnet, daß die Steuereinrichtung (19) für die Schaltmittel (58) so ausgebildet ist, daß in allen Schwenkstellungen einer gegebenen Schwenkbewegung jeweils dasselbe Wandlerelement oder dieselbe Gruppe von Wandlerelementen mit der Sender-Empfänger-Einrichtung (15, 17) verbunden ist.

8. Gerät gemäß Anspruch 1, dadurch gekennzeichnet, daß die Steuereinrichtung (19) für die Schaltmittel (58) so ausgebildet ist, daß während einer gegebenen Schwenkbewegung nacheinander abwechselnd zwei verschiedene Wandlerelemente oder zwei verschiedene Gruppen von Wandlerelementen mit der Sender-Empfänger-Einrichtung (15, 17) verbunden sind.

9. Gerät gemäß Anspruch 1 oder 7 oder 8, dadurch gekennzeichnet, daß die Elementen-Auswahleinrichtung (16) so gesteuert wird, daß jedes der verschiedenen Wandlerelemente bzw. jede der von ihr gewählten Gruppen von Wandlerelementen ausschließlich in einer der beiden Richtungen der Schwenkbewegung des Wandlers verwendet wird.

**Revendications**

1. Un dispositif d'imagerie par ultrasons pour produire des images en coupe transversale d'un corps comportant

un dispositif transducteur d'ultrasons (112) comportant un transducteur (12) d'ultrasons pivotant autour d'un axe (13) d'oscillation dans un plan perpendiculaire audit axe en vue de l'émission d'impulsions ultrasoniques le long de cibles à détecter situées dans le plan, qui correspondent à sa position pivotée respective, et de la transformation de signaux d'échos parvenant au transducteur d'ultrasons en signaux électriques d'image, le transducteur (12) d'ultrasons étant disposé à une distance déterminée au préalable de l'axe d'oscillation (13) et étant divisé en au moins trois éléments (21, 22, 23) de transducteur reliés de façon fixe l'un à l'autre, qui sont disposés en une rangée le long de la direction de pivotement,

un dispositif d'entraînement (14) couplé à l'axe d'oscillation en vue d'un pivotement périodique du transducteur d'ultrasons sur un domaine angulaire du plan défini par des positions de fin de course déterminées au préalable,

un dispositif émetteur-récepteur (15, 17) pour l'excitation en impulsion du transducteur d'ultrasons et pour le traitement des signaux d'image, et

un dispositif (18) de restitution d'image raccordé au dispositif émetteur-récepteur, caractérisé en ce que

entre le dispositif transducteur d'ultrasons (112) et le dispositif émetteur-récepteur (15, 17) est disposé un dispositif (16) de choix d'éléments, qui comprend des moyens de commutation réglables (58) en vue de la liaison du dispositif émetteur-récepteur avec des éléments transducteurs choisis,

il existe un dispositif de commande (19) des moyens commutateurs (58), qui est d'une structure telle que pendant des déplacements successifs de pivotement dans une position donnée de pivotement, respectivement un autre élément choisi parmi au moins deux éléments transducteurs ou respectivement au autre groupe choisi parmi deux groupes d'éléments de transducteur adjacents l'un à l'autre est relié au dispositif émetteur-récepteur.

le dispositif émetteur-récepteur présente des moyens (17) pour créer des signaux d'image assemblés à partir des signaux d'image obtenus pendant divers mouvements de pivotement.

2. Dispositif selon la revendication 1, caractérisé en ce que la surface d'émission du transducteur (12) est sphérique, cylindrique ou plate.

3. Dispositif selon la revendication 1, caractérisé en ce que chacun desdits divers groupes d'éléments transducteurs travaille avec une surface d'émission, qui se compose de parties de surfaces circulaires et/ou de surfaces rectangulaires.

4. Dispositif selon la revendication 1, caractérisé en ce que les divers éléments transducteurs (21, 22, 23) ou les divers groupes d'éléments transducteurs sont de même largeur, et en ce que le dispositif (19) de commande choisit les éléments transducteurs ou les groupes d'éléments transducteurs de telle façon que la distance entre des centres des surfaces d'émission des au moins deux éléments différents ou des au moins deux groupes différents est à peu près égale à la moitié de la largeur de chaque transducteur ou de chaque groupe.

5. Dispositif selon la revendication 1, caractérisé en ce que le dispositif (19) de commande choisit les groupes d'éléments transducteurs de telle façon que leurs surfaces d'émission sont constituées dans de telles configurations symétriques que les axes de symétrie des surfaces d'émission des groupes individuels viennent reposer soit dans les intervalles entre les surfaces d'émission d'éléments transducteurs voisins ou au milieu de la surface d'émission d'un élément transducteur.

6. Dispositif selon la revendication 5, caractérisé en ce que le dispositif de commande choisit les groupes d'éléments transducteurs de telle façon que, pendant une séquence de mouvements oscillants du transducteur, les axes de symétrie des surfaces d'émission des groupes choisis prennent au moins une fois chaque position possible dans les intervalles entre les surfaces d'émission d'éléments transducteurs voisins ou dans le centre de la surface d'émission d'un élément transducteur, ceci n'étant pas valable pour les éléments transducteurs de la première moitié du premier groupe de de transducteurs et de la deuxième moitié du dernier groupe de transducteurs du transducteurs.

7. Dispositif selon la revendication 1, caractérisé en ce que le dispositif de commande (19) des moyens de commutation (58) est d'une structure telle que, dans toutes les positions d'oscillations d'un mouvement d'oscillation donné le même élément transducteur ou le même groupe d'éléments transducteurs est respectivement relié au dispositif émetteur-récepteur (15, 17).

8. Dispositif selon la revendication 1, caractérisé en ce que le dispositif de commande (19) des moyens commutateurs (58) est d'une structure telle que, pendant un mouvement d'oscillations donné, deux éléments transducteurs différents ou deux groupes différents d'éléments transducteurs sont reliés en alternance l'un après l'autre au dispositif émetteur-récepteur (15, 17).

9. Dispositif selon la revendication 1 ou 7 ou 8, caractérisé en ce que le dispositif (16) de choix d'éléments est commandé de telle façon que chacun des divers éléments transducteurs ou chacun des groupes d'éléments transducteurs qu'il choisit est utilisé exclusivement dans l'un des deux sens du déplacement d'oscillations du transducteur.

**Claims**

1. An ultrasonic imaging device for producing cross-sectional images of a body and comprising:

An ultrasonic transducer arrangement (112) having an ultrasonic transducer (12) which is pivotable around an oscillation shaft (13) in a plane perpendicular thereto and which is adapted to emit ultrasonic pulses along scanning lines of the plane, such lines corresponding to the position into which the ultrasonic transducer (12) has been pivoted, and to convert into electric image signals echo signals reaching the ultrasonic transducer, the same being disposed at a predetermined distance from the oscillation shaft (13) and being subdivided into at least three rigidly interconnecting transducer elements (21—23) disposed in a line along the pivoting direction;

A drive unit (14) which is coupled with the oscillation shaft and which is adapted to periodically pivot the ultrasonic transducer through a range of angles of the plane, such range being defined by predetermined end positions;

A send-receive device (15, 17) for pulsating excitation of the ultrasonic transducer and for processing the image signals, and

An image display device (18) connected to the send-receive device, characterised in that

An element selector (16) comprising controllable switching means (58) for connecting the send-receive device to selected transducer elements is disposed between the ultrasonic transducer arrangement (112) and the send-receive device (15, 17);

A device (19) for controlling the switching means (58) is so devised that, during consecutive pivoting movements, in a given pivoted position another element selected from at least two transducer elements or another group selected from at least two groups of contiguous transducer elements is connected to the send-receive device, and

The send-receive device has means (17) for forming composite image signals from the image signals obtained during different pivoting movements.

2. A device according to Claim 1, characterised in that the radiating surface of the transducer (12) can be spherical or cylindrical or plane.

3. A device according to Claim 1, characterised in that each of the different groups of transducer elements operates with a radiating surface combined from parts of a circular surface and/or from rectangular surfaces.

4. A device according to Claim 1, characterised in that the various transducer elements (21—23) or the various groups of transducer elements are of equal width and the control device (19) so selects the transducer elements or groups thereof that the distance between the centres of the radiating surfaces of the at least two different transducer elements or of the at least two different groups thereof is approximately half the width of each transducer or group.

5. A device according to Claim 1, characterised in that the control device (19) so selects the groups of transducer elements that their radiating surfaces are formed into such symmetrical configurations that the axes of symmetry of the radiating surfaces of the various groups are disposed either in the gaps between transducer elements adjacent the radiating surfaces or at the centre of the radiating surface of a transducer element.

6. A device according to Claim 5, characterised in that the control device so selects the groups of transducer elements that during a sequence of pivoting movements of the transducer the axes of symmetry of the radiating surfaces of the selected groups take up at least once every possible position in the gaps between the radiating surfaces of adjacent transducer elements or at the centre of the radiating surface of one such element, this not being effective for the transducer elements of the first half of the first transducer group nor for the second half of the final transducer group of the transducer.

7. A device according to Claim 1, characterised in that the device (19) for controlling the switching means (58) is so devised that in all pivoted positions of a given pivoting movement the same transducer element or the same group of transducer elements is connected to the send-receive (15, 17).

8. A device according to Claim 1, characterised in that the device (19) for controlling the switching means (58) is so devised that during a given pivoting movement two different transducer elements or two different groups thereof are connected consecutively and alternately to the send-receive device (15, 17).

9. A device according to Claim 1 or 7 or 8, characterised in that the element-selecting device (16) is so controlled that each of the various transducer elements or each of such groups of transducer elements as have been selected by the selector (16) is used only in one of the two directions of the pivoting movement of the transducer.

**Fig. 1**

EP  0 176 879  B1

Fig. 2

*Fig. 3*

*Fig. 4*

**Fig. 5**

**Fig. 6**

# Fig: 7